(19) Europäisches Patentamt
European Patent Office
Office européen des brevets

(11) Veröffentlichungsnummer : **0 086 388**
**B1**

(12) **EUROPÄISCHE PATENTSCHRIFT**

(45) Veröffentlichungstag der Patentschrift : **15.05.85**

(51) Int. Cl.[4] : **C 09 B 29/09**// D06P1/36

(21) Anmeldenummer : **83100888.3**

(22) Anmeldetag : **01.02.83**

# (54) Farbstoffmischungen.

(30) Priorität : **12.02.82 DE 3205044**

(43) Veröffentlichungstag der Anmeldung : **24.08.83 Patentblatt 83/34**

(45) Bekanntmachung des Hinweises auf die Patenterteilung : **15.05.85 Patentblatt 85/20**

(84) Benannte Vertragsstaaten : **CH DE FR GB IT LI**

(56) Entgegenhaltungen :
**FR-A- 2 301 571**
**GB-A- 2 030 163**
**GB-A- 2 030 169**

(73) Patentinhaber : **BASF Aktiengesellschaft**
**Carl-Bosch-Strasse 38**
**D-6700 Ludwigshafen (DE)**

(72) Erfinder : **Degen, Helmut**
**Wildstrasse 32**
**D-6710 Frankenthal (DE)**
Erfinder : **Dix, Johannes Peter, Dr.**
**Ludwigshafener Strasse 125**
**D-6708 Neuhofen (DE)**
Erfinder : **Grund, Norbert, Dr.**
**Luitpoldstrasse 172**
**D-6700 Ludwigshafen (DE)**
Erfinder : **Hansen, Guenter, Dr.**
**Alwin-Mittasch-Platz 8**
**D-6700 Ludwigshafen (DE)**
Erfinder : **Krallmann, Reinhold**
**Bachweg 2**
**D-6719 Weisenheim (DE)**

**EP 0 086 388 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Farbstoffmischungen aus mindestens zwei verschiedenen Farbstoffen der Formel

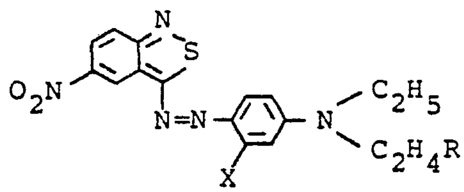

in der

X Wasserstoff, Methyl oder Chlor und

R ein Rest der Formel $OR^1$, $OCOCH_3$, $OCOC_2H_5$, 

$\overset{R^1}{\underset{|}{}}$
$CONC_2H_4OH$ oder

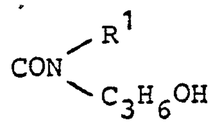

sind, wobei

$R^1$ Wasserstoff oder $C_1$- bis $C_4$-Alkyl ist.

Bevorzugt sind für

X Methyl und Wasserstoff und für

R OH, 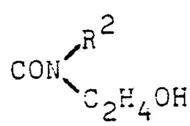 oder 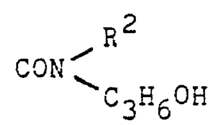

wobei

$R^2$ Wasserstoff, Methyl oder Ethyl ist.

Bevorzugte Mischungen bestehen neben möglichen Verunreinigungen aus 2 Komponenten ungefähr im Verhältnis 20 : 80 bis 80 : 20, vorzugsweise 40 : 60 bis 60 : 40. Zur Herstellung der erfindungsgemäßen Mischungen kann man eine Mischkupplung durchführen oder auch die Einzelfarbstoffe mechanisch mischen.

Die erfindungsgemäßen Mischungen zeichnen sich gegenüber den Einzelkomponenten durch ein im Bereich von 70 bis 90 °C weitgehend von der Temperatur unabhängiges Aufziehvermögen, durch sehr gutes Aufbauvermögen und höhere Farbstärke aus. Sie eignen sich aufgrund dieser Eigenschaften vorzüglich zum Färben von Celluloseestern wie 2 1/2- und Triacetat in blauen bis schwarzen Farbtönen und können hierbei die häufig verwendeten Anthrachinonfarbstoffe ersetzen.

Die Echtheiten solcher Färbungen, insbesondere die Naß-, Stickoxid- und auch Lichtechtheiten, sind sehr gut.

Färbungen auf synthetischen Polyestern sind ebenfalls möglich, wenn nicht auf höchste thermische Echtheiten Wert gelegt wird.

In den folgenden Beispielen beziehen sich Angaben über Teile und Prozente, sofern nicht anders vermerkt, auf das Gewicht.

Beispiel 1

9,7 Teile 3-Amino-5-nitro-2,1-benzisothiazol in 100 Teilen 85 %iger Schwefelsäure wurden bei 0-5 °C mit 15 Teilen Nitrosylschwefelsäure ($N_2O_3$-Gehalt 12,4 %) versetzt. Die Lösung wurde 3 Stunden bei dieser Temperatur gerührt und innerhalb 20 Minuten zu einer Mischung aus 7,5 Teilen N-Ethyl-N-(N'-methyl-N'-2-hydroxyethylaminocarbonylethyl)-anilin, 3,6 Teilen Ethyloxethyl-m-toluidin, 230 Raumteilen 35 %iger Natriumformiatlösung, 0,5 Teilen Amidosulfonsäure, 250 Teilen Eis und 50 Teilen Wasser zugetropft. Nach Beendigung der Kupplung wurde innerhalb von 5-6 Stunden allmählich auf 60 °C erhitzt, abgesaugt, neutral gewaschen und bei 60 °C im Vakuum getrocknet. Man erhielt so 16 Teile einer entsprechenden Mischung der Zusammensetzung

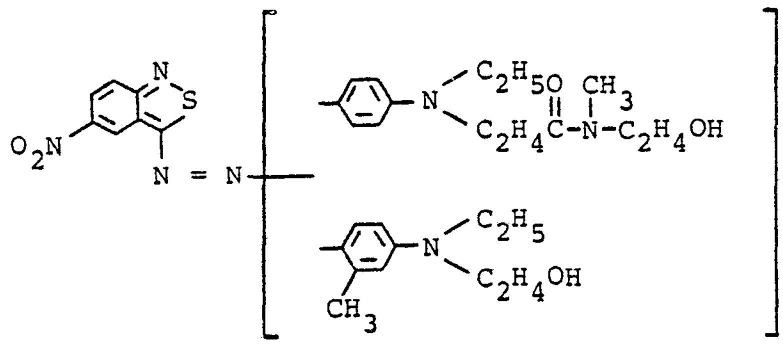

die Celluloseacetatfasern in farbstarken blauen Nuancen mit sehr guten Echtheiten färbt.

Beispiel 2

Je 50 Teile der analog Beispiel 1 hergestellten Einzelfarbstoffe

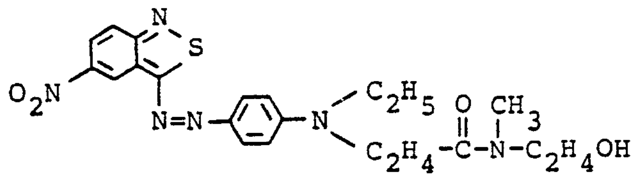

und

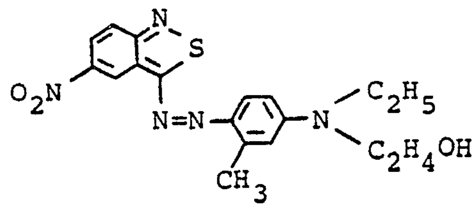

wurden in einer Kugelmühle vermischt und ergaben 100 Teile einer erfindungsgemäßen Farbstoffmischung, die Celluloseester in farbstarken blauen Nuancen mit sehr guten Allgemeinechtheiten färbt.

Durch Mischkupplung analog Beispiel 1 oder mechanisches Mischen der Einzelkomponenten analog Beispiel 2 wurden weiterhin die in der folgenden Tabelle niedergegebenen Farbstoffgemische hergestellt.

| | Komponente 1 | | Komponente 2 | | |
|---|---|---|---|---|---|
| Bsp. | X | R | X | R | Mischungsverhältnis |
| 3 | H | 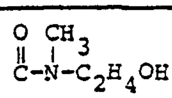 | $CH_3$ | OH | 20 : 80 |
| 4 | H | 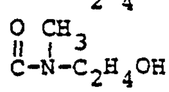 | $CH_3$ | OH | 40 : 60 |
| 5 | H | 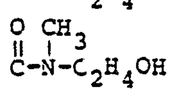 | $CH_3$ | OH | 80 : 20 |
| 6 | H | 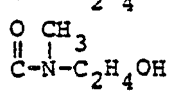 | H | 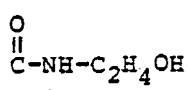 | 20 : 80 |
| 7 | H | 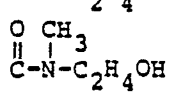 | H | 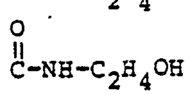 | 40 : 60 |
| 8 | H | 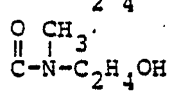 | H | 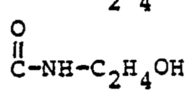 | 60 : 40 |
| 9 | H | 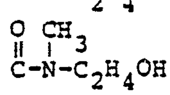 | H | 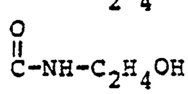 | 80 : 20 |

(Fortsetzung)

| Bsp. | Komponente 1 X | Komponente 1 R | Komponente 2 X | Komponente 2 R | Mischungsverhältnis |
|---|---|---|---|---|---|
| 10 | H | 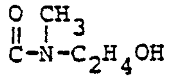 | H | OH | 20 : 80 |
| 11 | H | 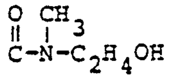 | H | OH | 40 : 60 |
| 12 | H | 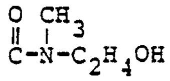 | H | OH | 60 : 40 |
| 13 | H | 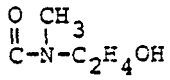 | H | OH | 80 : 20 |
| 14 | H | 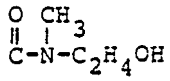 | H | 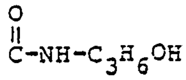 | 20 : 80 |
| 15 | H | 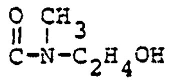 | H | 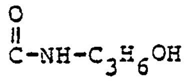 | 40 : 60 |
| 16 | H | 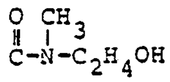 | H | 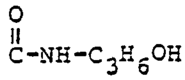 | 60 : 40 |
| 17 | H | 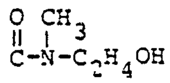 | H | 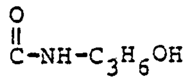 | 80 : 20 |
| 18 | $CH_3$ | 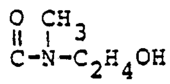 | H | OH | 20 : 80 |
| 19 | $CH_3$ | 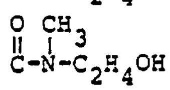 | H | OH | 40 : 60 |
| 20 | $CH_3$ | 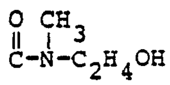 | H | OH | 60 : 40 |
| 21 | $CH_3$ | 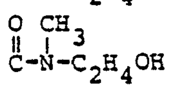 | H | OH | 80 : 20 |
| 22 | $CH_3$ | 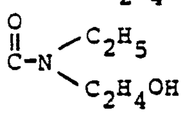 | H | OH | 40 : 60 |

Beispiel 23 (Färbung)

100 Teile eines Garns aus Cellulose-2 1/2-acetat färbt man 60 Minuten bei 80 °C in einem Bad, das 2 000 Teile Wasser, 0,35 Teile des feinverteilten Farbstoffgemisches aus Beispiel 1 und 3 Teile des Umsetzungsproduktes von 1 Mol Rizinusöl mit 40 Mol Ethylenoxid enthält.

Man erhält eine kräftige blaue Färbung mit vorzüglicher Licht- und Stickoxidechtheit und sehr guten Naßechtheitseigenschaften.

Beispiel 24 (Druck)

Eine Gewebe aus Cellulosetriacetat bedruckt man mit einer Paste aus 330 Teilen Wasser, 20 Teilen des feinverteilten Farbstoffs aus Beispiel 2, 640 Teilen einer Kristallgummiverdickung und 10 Teilen Triisobutylphosphat. Nach dem Trocknen dämpft man das bedruckte Gewebe 15 Minuten bei 1,5 atü.

Man erhält einen farbstarken blauen Druck mit hervorragenden Echtheitseigenschaften.

**Patentansprüche**

1. Farbstoffmischungen aus mindestens zwei verschiedenen Farbstoffen der Formel

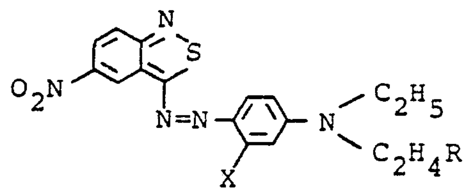

in der

X Wasserstoff, Methyl oder Chlor und

R ein Rest der Formel $OR^1$, $OCOCH_3$, $OCOC_2H_5$, $CO\overset{\overset{R^1}{|}}{N}C_2H_4OH$ oder

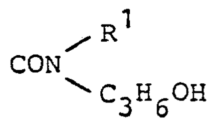

sind, wobei

$R^1$ Wasserstoff oder $C_1$- bis $C_4$-Alkyl ist.

2. Mischungen gemäß Anspruch 1, wobei

X Methyl oder Wasserstoff und

R OH, 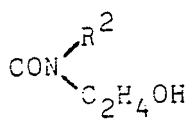 oder 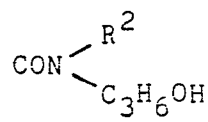

sind und

$R^2$ für Wasserstoff, Methyl oder Ethyl steht.

3. Verwendung der Mischungen gemäß Anspruch 1 zum Färben von Celluloseestern.

## Claims

1. A dye mixture of at least two different dyes of the formula

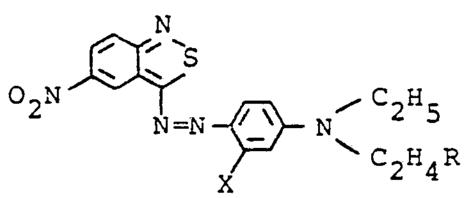

where

X is hydrogen, methyl or chlorine, and

R is a radical of the formula $OR^1$, $OCOCH_3$, $OCOC_2H_5$, $CO\overset{\overset{R^1}{|}}{N}C_2H_4OH$ or

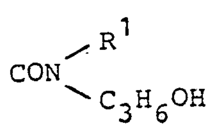

$R^1$ being hydrogen or $C_1$-$C_4$-alkyl.

2. A mixture as claimed in claim 1, where

X is methyl or hydrogen,

R is OH 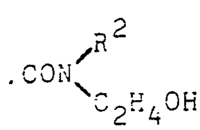 or 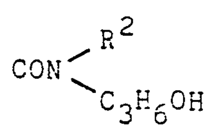

and

$R^2$ is hydrogen, methyl or ethyl.

3. The use of a mixture as claimed in claim 1 for dyeing cellulose esters.

**Revendications**

1. Mélanges de colorants, composés d'au moins deux colorants différents de formule

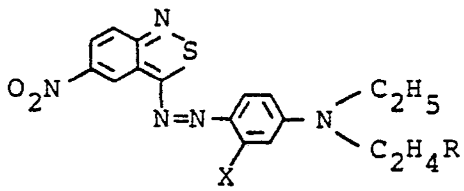

dans laquelle

X est un hydrogène, un méthyle ou un chlore et

R est un radical de formule $OR^1$, $OCOCH_3$, $OCOC_2H_5$, 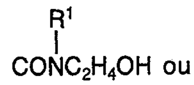 ou

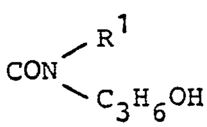

$R^1$ étant un hydrogène ou un alcoyle en $C_1$ à $C_4$.

2. Mélanges selon la revendication 1, dans lesquels

X est un méthyle ou un hydrogène et

R est mis pour OH, 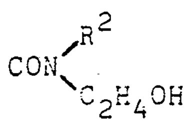 ou 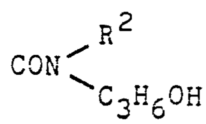

$R^2$ étant mis pour un hydrogène, un méthyle ou un éthyle.

3. Utilisation des mélanges selon la revendication 1 pour la teinture d'esters cellulosiques.